# EUROPEAN PATENT SPECIFICATION

(11) **EP 2 994 911 B1**
(45) Date of publication and mention of the grant of the patent: **22.08.2018**
(21) Application number: 14727131.6
(22) Date of filing: 24.04.2014
(51) Int. Cl.: G10L 15/32, G10L 15/183, G10L 15/22

(54) **ADAPTIVE AUDIO FRAME PROCESSING FOR KEYWORD DETECTION**
ADAPTIVE AUDIORAHMENVERARBEITUNG ZUR SCHLÜSSELWORTERKENNUNG
TRAITEMENT ADAPTATIF DE TRAME AUDIO POUR DÉTECTION DE MOT CLÉ

(30) Priority: 07.05.2013 US 201361820464 P; 26.07.2013 US 201361859048 P; 10.12.2013 US 201314102097
(43) Date of publication of application: 16.03.2016
(73) Proprietor: Qualcomm Incorporated, San Diego, CA 92121-1714 (US)
(72) Inventor: LEE, Minsub, San Diego, CA 92121-1714 (US); KIM, Taesu, San Diego, CA 92121-1714 (US); HWANG, KyuWoong, San Diego, CA 92121-1714 (US); KIM, Sungwoong, San Diego, CA 92121-1714 (US); JIN, Minho, San Diego, CA 92121-1714 (US)
(74) Representative: Howe, Steven
(86) International application number: PCT/US2014/035244
(87) International publication number: WO 2014/182459

(56) References cited:
- US-A- 6 138 095
- US-A1- 2013 110 521

## Description

### CLAIM OF PRIORITY

The present application claims priority from commonly owned U.S. Provisional Patent Application No. 61/820,464 filed May 7, 2013, U.S. Provisional Patent Application No. 61/859,048 filed July 26, 2013 and U.S. Non-Provisional Patent Application No. 14/102,097 filed December 10, 2013.

### TECHNICAL FIELD

The present disclosure generally relates to speech recognition in mobile devices, and more specifically, to processing an input sound for detecting a target keyword in mobile devices.

### BACKGROUND

Recently, the use of mobile devices such as smartphones and tablet computers has become widespread. These devices typically provide voice and data communication functionalities over wireless networks. In addition, such mobile devices typically include other features that provide a variety of functions designed to enhance user convenience.

One of the features that are being used increasingly is a voice assistant function. The voice assistant function allows a mobile device to receive a voice command and run various applications in response to the voice command. For example, a voice command from a user allows a mobile device to call a desired phone number, play an audio file, take a picture, search the Internet, or obtain weather information, without a physical manipulation of the mobile device.

In conventional mobile devices, the voice assistant function is typically activated in response to detecting a target keyword from an input sound. Detection of a target keyword generally involves extracting sound features from the input sound and normalizing the sound features one at a time. However, sequentially normalizing the sound features in such a manner may result in a delay in detecting the target keyword from the input sound. On the other hand, in a mobile device with limited power supply, the normalization of the sound features may be performed at once. In this case, however, such normalization typically results in a substantial process load that takes some time to return to a normal process load while depleting power resources.

US 6 138 095 Adiscloses a speech recognition system in which input speech is presented to a feature extraction and end-point processing block for processing.

### SUMMARY

The present disclosure provides methods and apparatus for detecting a target keyword from an input sound in mobile devices.

According to one aspect of the present disclosure, a method of detecting a target keyword from an input sound for activating a function in a mobile device is disclosed. In this method, a first plurality of sound features is received in a buffer, and a second plurality of sound features is received in the buffer. While receiving each of the second plurality of sound features in the buffer, a first number of the sound features are processed from the buffer. The first number of the sound features includes two or more sound features. Further, the method may include determining a keyword score for at least one of the processed sound features and detecting the input sound as the target keyword if at least one of the keyword scores is greater than a threshold score. This disclosure also describes apparatus, a device, a system, a combination of means, and a computer-readable medium relating to this method.

According to another aspect of the present disclosure, a mobile device includes a buffer, a feature processing unit, a keyword score calculation unit, and a keyword detection unit. The buffer is configured to store a first plurality of sound features and a second plurality of sound features. The feature processing unit is configured to process a first number of the sound features from the buffer while the buffer receives each of the second plurality of sound features. The first number of the sound features includes two or more sound features. The keyword score calculation unit is configured to determine a keyword score for each of the processed sound features. The keyword detection unit is configured to detect an input sound as a target keyword if at least one of the keyword scores is greater than a threshold score.

The invention is as defined in Claims 1, 14 and 15.

### BREIF DESCRIPTION OF THE DRAWINGS

Embodiments of the inventive aspects of this disclosure will be understood with reference to the following detailed description, when read in conjunction with the accompanying drawings.
**FIG. 1** illustrates activating a voice assistant application in a mobile device in response to detecting a target keyword from an input sound according to one embodiment of the present disclosure.
**FIG. 2** illustrates a block diagram of a mobile device configured to detect a target keyword from an input sound stream and activate a voice assistant unit according to one embodiment of the present disclosure.
**FIG. 3** illustrates a block diagram of a voice activation unit configured to detect a target keyword by processing a plurality of sound features from a feature buffer while receiving a next sound feature in the feature buffer, according to one embodiment of the present disclosure.
**FIG. 4** illustrates a diagram of segmenting an input sound stream into a plurality of frames and extracting a plurality of sound features from the frames according to one embodiment of the present disclosure.
**FIG. 5** illustrates a diagram of a feature buffer showing sound features that are received from a feature extractor and output to a feature processing unit over a time period from T₁ through T_{M}, according to one embodiment of the present disclosure.
**FIG. 6A** is a flow chart of a method, performed in a mobile device, for detecting a target keyword from an input sound stream to activate a function in the mobile device according to one embodiment of the present disclosure.
**FIG. 6B** is a flow chart of a method, performed in a mobile device, for sequentially receiving and normalizing a sequence of sound features when a feature buffer includes less than a first number of sound features after previous sound features have been retrieved and normalized, according to one embodiment of the present disclosure.
**FIG. 7** is a flow chart of a method performed in a mobile device for adjusting a number of sound features that are to be normalized by a feature processing unit based on resource information of the mobile device, according to one embodiment of the present disclosure.
**FIG. 8** illustrates an exemplary graph in which a first number indicating a number of sound features that are to be normalized by a feature processing unit is adjusted based on available resources of a mobile device.
**FIG. 9** illustrates a diagram of a feature processing unit configured to skip normalization of one or more sound features among a first number of sound features retrieved from a feature buffer, according to one embodiment of the present disclosure.
**FIG. 10** is a flow chart of a method for determining whether to perform normalization on a current sound feature based on a difference between the current sound feature and a previous sound feature, according to one embodiment of the present disclosure.
**FIG. 11** is a flow chart of a method performed in a mobile device for adjusting a number of sound features that are to be normalized among a first number of sound features based on resource information of the mobile device, according to one embodiment of the present disclosure.
**FIG. 12** illustrates an exemplary graph in which a number indicating sound features that are to be normalized among a first number of sound features is adjusted according to available resources of a mobile device, in accordance with another embodiment of the present disclosure.
**FIG. 13** illustrates a block diagram of an exemplary mobile device in which the methods and apparatus for detecting a target keyword from an input sound to activate a function may be implemented according to some embodiments.

### DETAILED DESCRIPTION

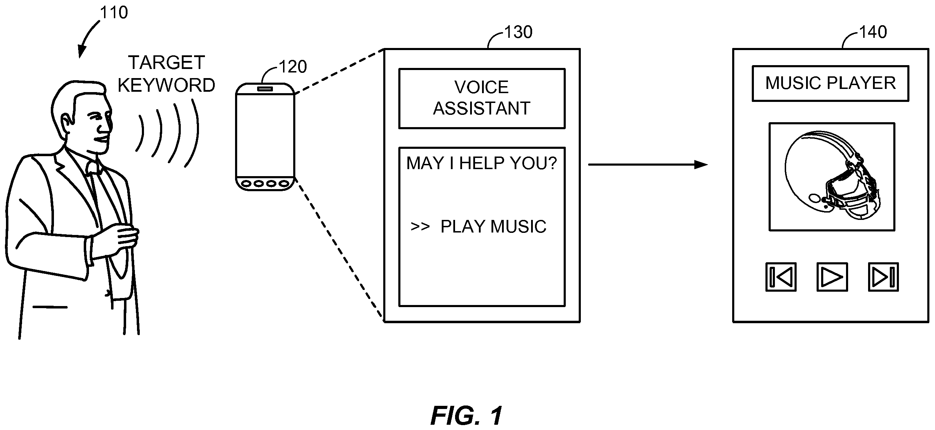

**FIG. 1** illustrates activating a voice assistant application 130 in a mobile device 120 in response to detecting a target keyword from an input sound according to one embodiment of the present disclosure. To activate the voice assistant application 130, a user 110 speaks the target keyword, which is captured by the mobile device 120. When the mobile device 120 detects the target keyword, the voice assistant application 130 is activated to output a message such as "MAY I HELP YOU?" on a display unit or through a speaker unit of the mobile device 120.

In response, the user 110 may activate various functions of the mobile device 120 through the voice assistant application 130 by speaking other voice commands. For example, the user may activate a music player 140 by speaking a voice command "PLAY MUSIC." Although the illustrated embodiment activates the voice assistant application 130 in response to detecting the target keyword, it may also activate any other applications or functions in response to detecting an associated target keyword. In one embodiment, the mobile device 120 may detect the target keyword by retrieving a plurality of sound features from a buffer for processing while generating and receiving a next sound feature into the buffer as will be described in more detail below.

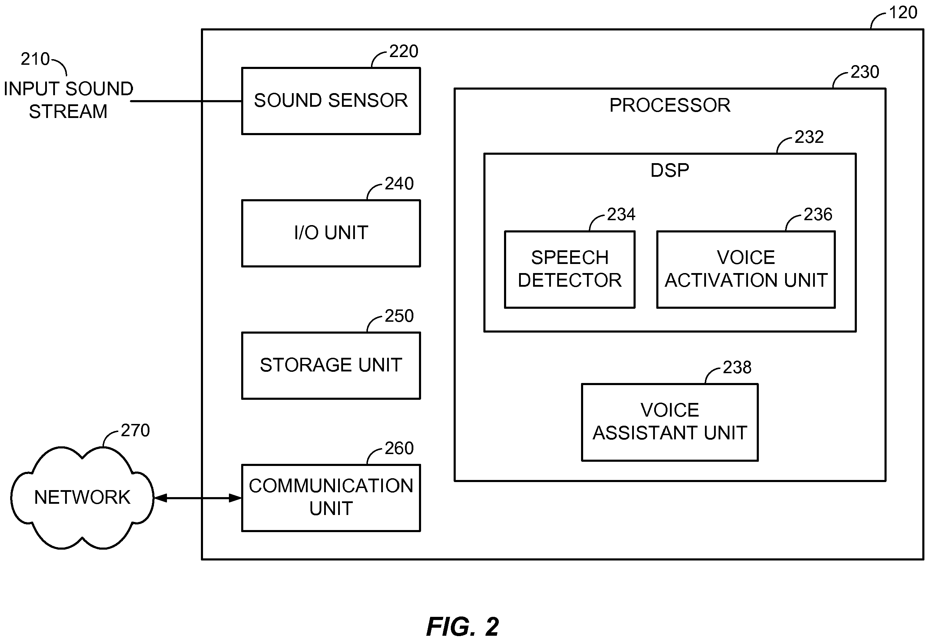

**FIG. 2** illustrates a block diagram of the mobile device 120 configured to detect a target keyword from an input sound stream 210 and activate a voice assistant unit 238 according to one embodiment of the present disclosure. As used herein, the term "sound stream" refers to a sequence of one or more sound signals or sound data. Further, the term "target keyword" refers to any digital or analog representation of one or more words or sound that can be used to activate a function or an application in the mobile device 120. The mobile device 120 includes a sound sensor 220, a processor 230, an I/O unit 240, a storage unit 250, and a communication unit 260. The mobile device 120 may be any suitable devices equipped with a sound capturing and processing capability such as a cellular phone, a smartphone, a laptop computer, a tablet personal computer, a gaming device, a multimedia player, etc.

The processor 230 includes a digital signal processor (DSP) 232 and a voice assistant unit 238, and may be an application processor or a central processing unit (CPU) for managing and operating the mobile device 120. The DSP 232 includes a speech detector 234 and a voice activation unit 236. In one embodiment, the DSP 232 is a low power processor for reducing power consumption in processing sound streams. In this configuration, the voice activation unit 236 in the DSP 232 is configured to activate the voice assistant unit 238 when the target keyword is detected in the input sound stream 210. Although the voice activation unit 236 is configured to activate the voice assistant unit 238 in the illustrated embodiment, it may also activate any functions or applications that may be associated with a target keyword.

The sound sensor 220 may be configured to receive the input sound stream 210 and provide it to the speech detector 234 in the DSP 232. The sound sensor 220 may include one or more microphones or any other types of sound sensors that can be used to receive, capture, sense, and/or detect the input sound stream 210. In addition, the sound sensor 220 may employ any suitable software and/or hardware for performing such functions.

In one embodiment, the sound sensor 220 may be configured to receive the input sound stream 210 periodically according to a duty cycle. In this case, the sound sensor 220 may determine whether the received portion of the input sound stream 210 is greater than a threshold sound intensity. When the received portion of the input sound stream 210 is greater than the threshold sound intensity, the sound sensor 220 activates the speech detector 234 and provides the received portion to the speech detector 234 in the DSP 232. Alternatively, without determining whether the received portion exceeds a threshold sound intensity, the sound sensor 220 may receive a portion of the input sound stream periodically and activate the speech detector 234 to provide the received portion to the speech detector 234.

For use in detecting the target keyword, the storage unit 250 stores the target keyword and state information on a plurality of states associated with a plurality of portions of the target keyword. In one embodiment, the target keyword may be divided into a plurality of basic sound units such as phones, phonemes, or subunits thereof, and the plurality of portions representing the target keyword may be generated based on the basic sound units. Each portion of the target keyword is then associated with a state under a Markov chain model such as a hidden Markov model (HMM), a semi-Markov model (SMM), or a combination thereof. The state information may include transition information from each of the states to a next state including itself. The storage unit 250 may be implemented using any suitable storage or memory devices such as a RAM (Random Access Memory), a ROM (Read-Only Memory), an EEPROM (Electrically Erasable Programmable Read-Only Memory), a flash memory, or a solid state drive (SSD).

The speech detector 234 in the DSP 232, when activated, receives the portion of the input sound stream 210 from the sound sensor 220. In one embodiment, the speech detector 234 extracts a plurality of sound features from the received portion and determines whether the extracted sound features indicate sound of interest such as human speech by using any suitable sound classification method such as a Gaussian mixture model (GMM) based classifier, a neural network, a HMM, a graphical model, and a Support Vector Machine (SVM). If the received portion is determined to be sound of interest, the speech detector 234 activates the voice activation unit 236 and the received portion and the remaining portion of the input sound stream are provided to the voice activation unit 236. In some other embodiments, the speech detector 234 may be omitted in the DSP 232. In this case, when the received portion is greater than the threshold intensity, the sound sensor 220 activates the voice activation unit 236 and provides the received portion and the remaining portion of the input sound stream 210 directly to the voice activation unit 236.

The voice activation unit 236, when activated, is configured to continuously receive the input sound stream 210 and detect the target keyword from the input sound stream 210. As the input sound stream 210 is received, the voice activation unit 236 may sequentially extract a plurality of sound features from the input sound stream 210. In addition, the voice activation unit 236 may process each of the plurality of extracted sound features, obtain the state information including the plurality of states and transition information for the target keyword from the storage unit 250. For each processed sound feature, an observation score may be determined for each of the states by using any suitable probability model such as a GMM, a neural network, and a SVM.

From the transition information, the voice activation unit 236 may obtain transition scores from each of the states to a next state in a plurality of state sequences that are possible for the target keyword. After determining the observation scores and obtaining the transition scores, the voice activation unit 236 determines scores for the possible state sequences. In one embodiment, the greatest score among the determined scores may be used as a keyword score for the processed sound feature. If the keyword score for the processed sound feature is greater than a threshold score, the voice activation unit 236 detects the input sound stream 210 as the target keyword. In a particular embodiment, the threshold score may be a predetermined threshold score. Upon detecting the target keyword, the voice activation unit 236 generates and transmits an activation signal to turn on the voice assistant unit 238, which is associated with the target keyword.

The voice assistant unit 238 is activated in response to the activation signal from the voice activation unit 236. Once activated, the voice assistant unit 238 may turn on the voice assistant application 130 to output a message such as "MAY I HELP YOU?" on a touch display unit and/or through a speaker unit of the I/O unit 240. In response, a user may speak voice commands to activate various associated functions of the mobile device 120. For example, when a voice command for Internet search is received, the voice assistant unit 238 may recognize the voice command as a search command and perform a web search via the communication unit 260 through the network 270.

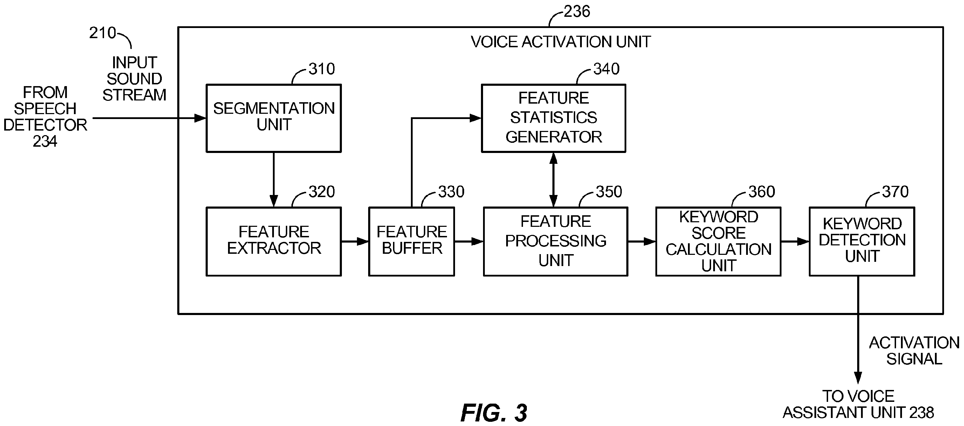

**FIG. 3** illustrates a block diagram of the voice activation unit 236 configured to detect a target keyword by processing a plurality of sound features from a feature buffer 330 while receiving a next sound feature in the feature buffer 330, according to one embodiment of the present disclosure. The voice activation unit 236 includes a segmentation unit 310, a feature extractor 320, the feature buffer 330, a feature statistics generator 340, a feature processing unit 350, a keyword score calculation unit 360, and a keyword detection unit 370. When the keyword detection unit 370 in the voice activation unit 236 detects the target keyword, it generates an activation signal to turn on the voice assistant unit 238.

When the speech detector 234 determines an input sound stream 210 to be human speech, the segmentation unit 310 receives and segments the input sound stream 210 into a plurality of sequential frames of an equal time period. For example, the input sound stream 210 may be received and segmented into frames of 10 ms. The feature extractor 320 sequentially receives the segmented frames from the segmentation unit 310 and extracts a sound feature from each of the frames. In one embodiment, the feature extractor 320 may extract the sound features from the frames using any suitable feature extraction method such as the MFCC (Mel-frequency cepstral coefficients) method. For example, in the case of the MFCC method, components of an n-dimensional vector are calculated from each of the segmented frames and the vector is used as a sound feature.

The feature buffer 330 is configured to sequentially receive the extracted sound features from the feature extractor 320. In the case of 10 ms frames, the feature buffer 330 may receive each of the sound features in a 10 ms interval. In one embodiment, the feature buffer 330 may be a FIFO (first-in first-out) buffer where the sound features are sequentially written to the buffer and are read out in an order that they are received. In another embodiment, the feature buffer 330 may include two or more memories configured to receive and store sound features, and output one or more sound features in the order received. For example, the feature buffer 330 may be implemented using a ping-pong buffer or a dual buffer in which one buffer receives a sound feature while the other buffer outputs a previously written sound feature. In some embodiments, the feature buffer 330 may be implemented in the storage unit 250.

The feature statistics generator 340 accesses the sound features received in the feature buffer 330 and generates feature statistics of the sound features. The feature statistics may include at least one of a mean µ, a variance σ², a maximum value, a minimum value, a noise power, a signal-to-noise ratio (SNR), a signal power, an entropy, a kurtosis, a high order momentum, etc. that are used in processing the sound features in the feature processing unit 350. In one embodiment, initial feature statistics may be generated for a plurality of sound features initially received in the feature buffer 330 and updated with each of the subsequent sound features received in the feature buffer 330 to generate updated feature statistics. For example, the initial feature statistics may be generated once for the first thirty sound features received in the feature buffer 330 and then updated with each of the subsequent sound features that are received in the feature buffer 330.

Once the feature statistics generator 340 generates the initial feature statistics for the plurality of initially received sound features, the feature buffer 330 receives a next sound feature. While the feature buffer 330 receives the next sound feature, the feature processing unit 350 receives a first number of the sound features from the feature buffer 330 in the order received (e.g., first-in first-out) and processes each of the predetermined number of the sound features. In a particular embodiment, the first number of sound features may be a predetermined number of sound features. For example, the first number of sound features may be two or more sound features. In one embodiment, the feature processing unit 350 may normalize each of the first number of sound features based on the associated feature statistics, which include a mean µ and a variance σ². In other embodiments, the feature processing unit 350 may perform one or more of noise suppression, echo cancellation, etc. on each of the first number of sound features based on the associated feature statistics.

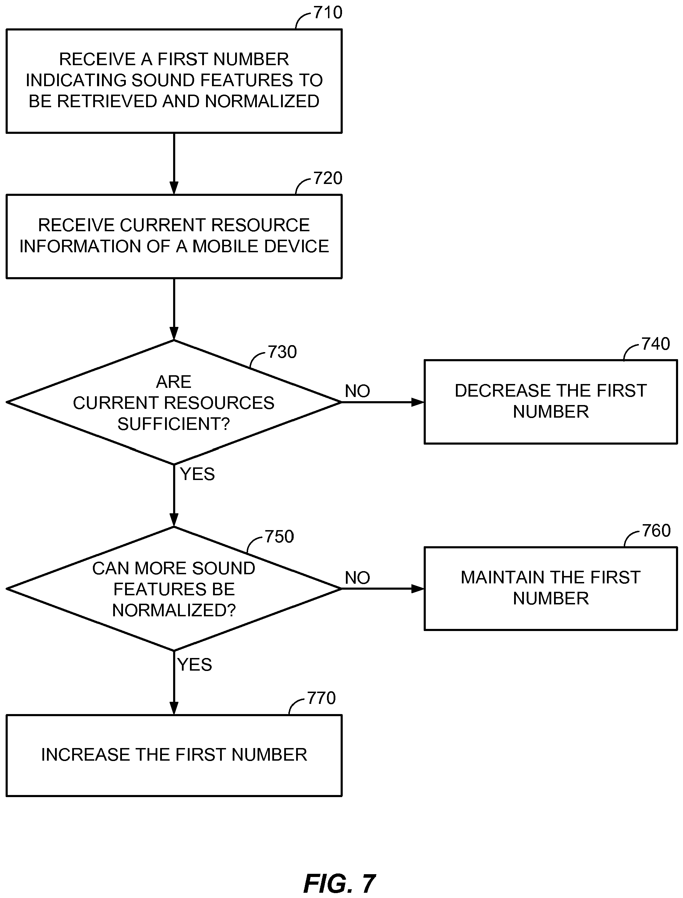

The first number of sound features (e.g., two or more sound features) may be adjusted (e.g., improved) based on available processing resources. For example, the feature processing unit 350 may process multiple sound features during a single time frame (e.g., a clock cycle) as opposed to processing a single sound feature during the single time frame. In a particular embodiment, the number of sound features processed by the feature processing unit 350 during a single time frame may be determined based on an availability of resources, as described with respect to FIGs. 7-8. In this particular embodiment, the number of sound features processed by the feature processing unit 350 may vary from time frame to time frame based on the availability of resources. As a non-limiting example, as more resources of a central processing unit (CPU) become available, a greater number of sound features may be processed by the feature processing unit 350 during a time frame. In another particular embodiment, the number of sound features processed by the feature processing unit 350 during a single time frame may remain substantially constant from time frame to time frame. As a non-limiting example, the feature processing unit 350 may process two sound features every time frame, four sound features every time frame, etc.

In some embodiments, since the sound features are processed in the order that they are received in the feature buffer 330, the feature processing unit 350 retrieves and normalizes the first number of the sound features starting from the first sound feature. In this manner, during the time it takes for the feature buffer 330 to receive a next sound feature, the feature processing unit 350 accesses and normalizes the first number of sound features from the feature buffer 330. After the feature processing unit 350 finishes normalizing the initially received sound features based on the initial feature statistics, the feature processing unit 350 normalizes the next sound feature based on the feature statistics updated with the next sound feature. The keyword score calculation unit 360 receives the first number of normalized sound features from the feature processing unit 350 and determines a keyword score for each of the normalized sound features. The keyword score may be determined in the manner as described above with reference to **FIG. 2****.**

The keyword detection unit 370 receives the keyword score for each of the first number of the normalized sound features and determines whether any one of the keyword scores is greater than a threshold score. As a non-limiting example, the threshold score may be a predetermined threshold score. In one embodiment, the keyword detection unit 370 may detect the input sound stream 210 as the target keyword if at least one of the keyword scores is greater than the threshold score. The threshold score may be set to a minimum keyword score for detecting the target keyword within a desired confidence level. When any one of the keyword scores exceeds the threshold score, the keyword detection unit 370 generates the activation signal to turn on the voice assistant unit 238.

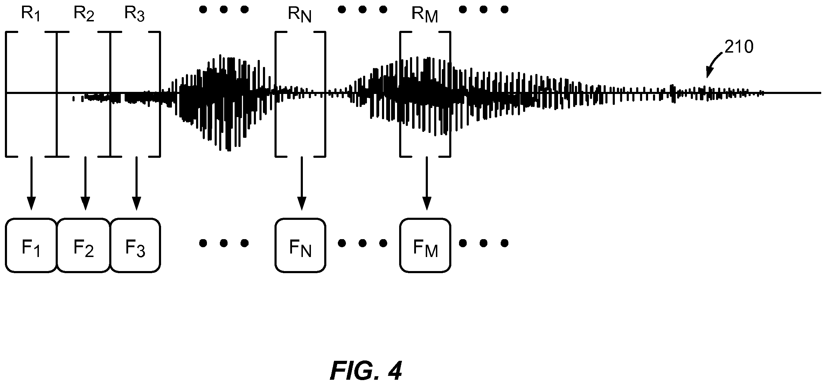

**FIG. 4** illustrates a diagram of segmenting the input sound stream 210 into a plurality of frames, and extracting a plurality of sound features from the frames, respectively, according to one embodiment of the present disclosure. In the voice activation unit 236, when the input sound stream 210 is received, the segmentation unit 310 sequentially segments the input sound stream 210 to generate the plurality of frames Ri to R_{M}. In this process, the input sound stream 210 may be segmented according to a fixed time period such that the plurality of frames Ri to R_{M} has an equal time period.

As each of the plurality of frames Ri to R_{M} is generated, the feature extractor 320 sequentially receives the frames Ri to R_{M}, and extracts the plurality of sound features F₁ to F_{M} from the frames Ri to R_{M}, respectively. In one embodiment, the sound features F₁ to F_{M} may be extracted in the form of MFCC vectors. The extracted sound features F₁ to F_{M} are then sequentially provided to the feature buffer 330 for storage and processing.

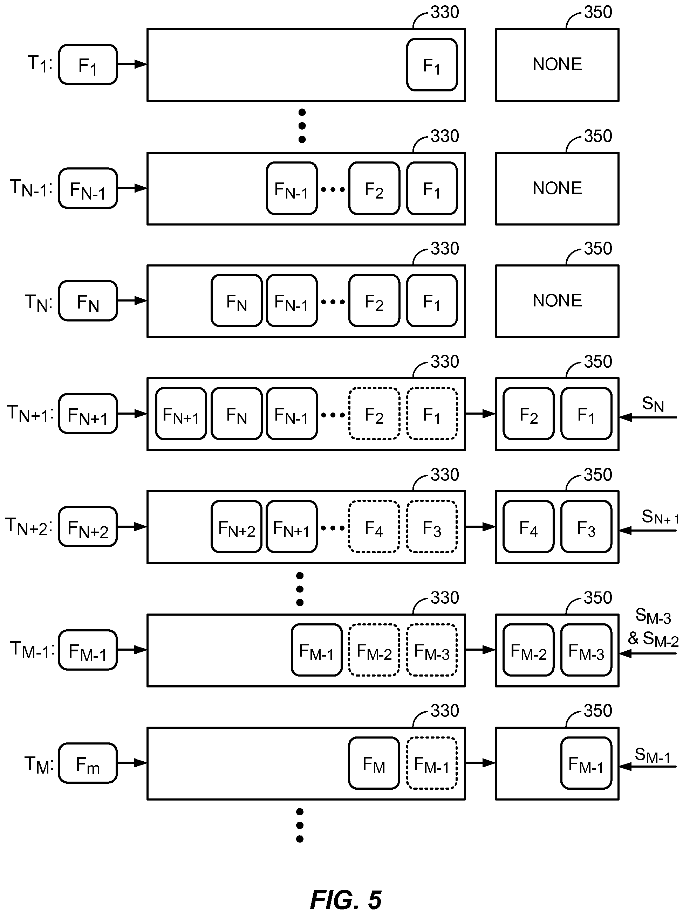

**FIG. 5** illustrates a diagram of the feature buffer 330 showing sound features that are received from the feature extractor 320 and output to the feature processing unit 350 over a time period from T₁ through T_{M}, according to one embodiment of the present disclosure. In some embodiments, each of the time periods T₁ through T_{M} indicates a time period between receiving a current sound feature and a next sound feature in the feature buffer 330. The feature processing unit 350 is configured to start normalizing sound features from the feature buffer 330 after initial feature statistics S_{N} of an N number of sound features (e.g., 30 sound features) have been generated. During the time periods T₁ to T_{N-1}, the N number of sound features has not yet been received for generating the initial feature statistics S_{N}. Accordingly, the feature processing unit 350 waits until the feature buffer 330 receives the N number of sound features to enable the feature statistics generator 340 to generate the initial feature statistics S_{N}.

During the time periods T₁ through T_{N}, the feature buffer 330 sequentially receives and stores the sound features F₁ to F_{N}, respectively. Once the feature buffer 330 receives the N number of sound features F₁ to F_{N}, the feature statistics generator 340 accesses the sound features F₁ to F_{N} from the feature buffer 330 to generate the initial feature statistics S_{N}. In the illustrated embodiment, the feature processing unit 350 does not normalize any sound features from the feature buffer 330 during the time periods T₁ through T_{N}.

During the time period T_{N+1}, the feature processing unit 350 retrieves and normalizes a number of sound features (e.g., a predetermined number of sound features) from the feature buffer 330 while the feature buffer 330 receives the sound feature F_{N+1}. In the illustrated embodiment, the feature processing unit 350 retrieves and normalizes the first two sound features F₁ and F₂ from the feature buffer 330 based on the initial feature statistics S_{N} during the time period T_{N+1}. Alternatively, the feature processing unit 350 may be configured to normalize the sound features F₁ and F₂ based on the initial feature statistics S_{N} during the time period T_{N}. The sound features in the feature buffer 330 that are retrieved and normalized by the feature processing unit 350 are indicated as a box with a dotted line.

Since the feature processing unit 350 normalizes the sound features F₁ and F₂ during the time period T_{N+1}, time delays between receiving and normalizing the sound features F₁ and F₂ are approximately N time periods and N-1 time periods, respectively. When the feature buffer 330 receives the sound feature F_{N+1}, the feature statistics generator 340 accesses the sound feature F_{N+1} from the feature buffer 330 and updates the initial feature statistics S_{N} with the sound feature F_{N+1} during the time period T_{N+1} to generate updated feature statistics S_{N+1}. Alternatively, the feature statistics generator 340 may update the initial feature statistics S_{N} with the sound feature F_{N+1} to generate the updated feature statistics S_{N+1} at any time before the feature processing unit 350 normalizes the sound feature F_{N+1}.

During the time period T_{N+2}, the feature processing unit 350 retrieves and normalizes the next two sound features F₃ and F₄ from the feature buffer 330 based on the initial feature statistics S_{N} while the feature buffer 330 receives a sound feature F_{N+2}. When the feature buffer 330 receives the sound feature F_{N+2}, the feature statistics generator 340 accesses the sound feature F_{N+2} from the feature buffer 330 and updates the previous feature statistics S_{N+1} with the sound feature F_{N+2} during the time period T_{N+2} to generate updated feature statistics S_{N+2}. In this manner, the feature processing unit 350 normalizes each of the sound features F₁ to F_{N} based on the initial feature statistics S_{N}, and each of the subsequent sound features including F_{N+1} by recursively updating the feature statistics.

In time periods T_{N+3} through T_{M-1}, the number of sound features stored in the feature buffer 330 is reduced by one at each time period since one sound feature is written into the feature buffer 330 while two sound features are retrieved and normalized. During these time periods, the feature statistics generator 340 accesses sound features F_{N+3} to F_{M-1} and updates the previous feature statistics with the sound features F_{N+3} to F_{M-1} to generate updated feature statistics S_{N+3} to S_{M-1}, respectively. For example, during the time period T_{N+3}, the feature statistics generator 340 accesses the sound feature F_{N+3} and updates the feature statistics S_{N+2} with the sound feature F_{N+3} to generate updated feature statistics S_{N+3}. In the illustrated embodiment, during the time period T_{M-1}, the feature processing unit 350 retrieves and normalizes the sound features F_{M-3} and F_{M-2} from the feature buffer 330 based on features statistics S_{M-3} and S_{M-2}, respectively, while the feature buffer 330 receives the sound feature F_{M-1}.

As illustrated in **FIG. 5**, at the end of the time period T_{M-1}, the sound feature F_{M-1} is the only sound feature stored in the feature buffer 330 as the feature processing unit 350 has retrieved and normalized the sound features F_{M-3} and F_{M-2} from the feature buffer 330. From this point on, the feature buffer 330 includes one sound feature during each time period. Accordingly, during the time period T_{M}, the feature processing unit 350 retrieves and normalizes the sound feature F_{M-1} from the feature buffer 330 based on the feature statistics S_{M-1} while the feature buffer 330 receives a sound feature F_{M}. By normalizing a plurality of sound features when the feature buffer 330 includes more than one sound feature, the delay between receiving and normalizing such sound features may be reduced substantially.

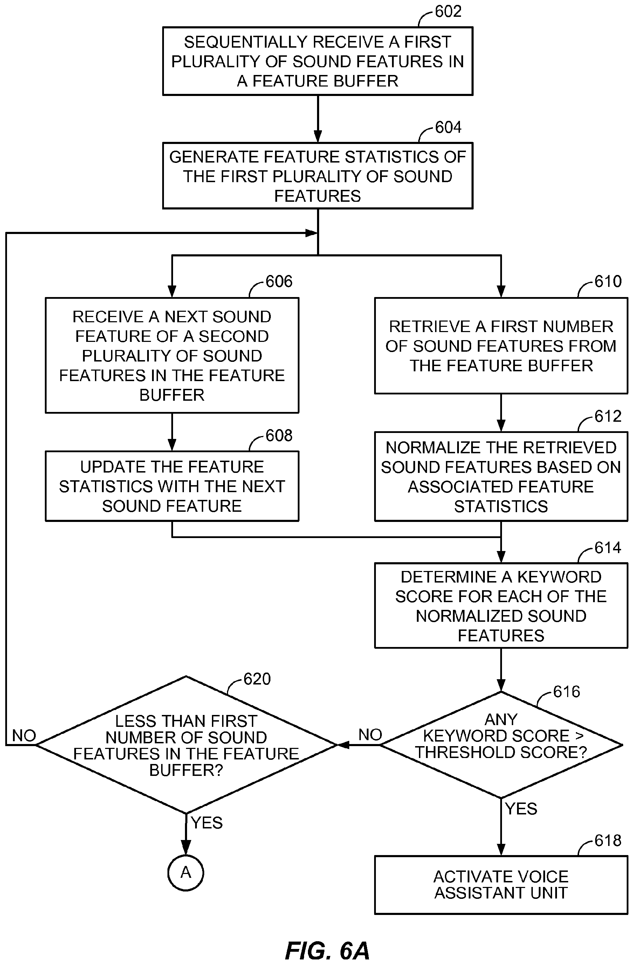

**FIG. 6A** is a flow chart of a method, performed in the mobile device 120, for detecting a target keyword from an input sound stream to activate a function in the mobile device 120 according to one embodiment of the present disclosure. In the mobile device 120, the feature buffer 330 sequentially receives a first plurality of sound features of the input sound stream from the feature extractor 320 at 602. As described with reference to **FIG. 5**, the N number of sound features F₁to F_{N} (e.g., 30 sound features) may be received and stored in the feature buffer 330 for use in generating the initial feature statistics S_{N}. In one embodiment, receiving the first plurality of sound features may include segmenting a first portion of the input sound stream into a first plurality of frames and extracting the first plurality of sound features from the first plurality of frames.

When the first plurality of sound features has been received in the feature buffer 330, the feature statistics generator 340, at 604, generates the initial feature statistics S_{N} for the first plurality of sound features, e.g., a mean µ and a variance σ². For sound features extracted in the form of MFCC vectors, each sound feature includes a plurality of components. In this case, the feature statistics may include a mean µ and a variance σ² for each of the components of the sound features. In one embodiment, the feature statistics generator 340 may access the first plurality of sound features after the feature buffer 330 has received the first plurality of sound features. In another embodiment, the feature statistics generator 340 may access each of the first plurality of sound features as the feature buffer 330 receives the sound features.

In the illustrated method, during a time period T, the feature processing unit 350 receives and normalizes a first number of sound features from the output of the feature buffer 330 at 610 and 612 while a next sound feature of a second plurality of sound features is written into the feature buffer 330 at 606. On the input side, the feature buffer 330 receives the next sound feature (e.g., F_{N+1}) of the second plurality of sound features at 606. As the next sound feature (e.g., F_{N+1}) is received in the feature buffer 330, the feature statistics generator 340 accesses, at 608, the next sound feature (e.g., F_{N+1}) from the feature buffer 330 and updates the previous feature statistics (e.g., S_{N}) with the next sound feature (e.g., F_{N+1}) to generate updated feature statistics (e.g., S_{N+1}). For example, the feature statistics generator 340 generates the updated feature statistics S_{N+1} by calculating a new mean µ and a new variance σ² of the sound features F₁ to F_{N+1}.

On the output side of the feature buffer 330, the feature processing unit 350 retrieves the first number of sound features that includes two or more sound features from the feature buffer 330 at 610. The feature processing unit 350 then normalizes the retrieved first number of sound features (e.g., F₁ and F₂) based on the feature statistics (e.g., S_{N}) at 612. In one embodiment, the feature processing unit 350 may normalize each of the retrieved sound features based on the initial feature statistics if the retrieved sound feature is from the first plurality of sound features. For subsequent sound features (e.g., F_{N+1}), the feature processing unit 350 may normalize each of the retrieved sound features based on the recursively updated feature statistics (e.g., S_{N+1}). In the case of sound features extracted by using the MFCC method, the sound features may be in the form of MFCC vectors, and normalized based on mean values and variance values of each component of the MFCC vector.

At 614, the keyword score calculation unit 360 receives the normalized sound features and determines a keyword score for each of the normalized sound features as described above with reference to **FIG. 2**. At 616, the keyword detection unit 370 receives the keyword scores for the normalized sound features and determines whether any one of the keyword scores is greater than a threshold score. In one embodiment, the keyword detection unit 370 may detect the target keyword in the input sound stream if at least one of the keyword scores is greater than the threshold score. If any one of the keyword scores is greater than the threshold score, the keyword detection unit 370 activates the voice assistant unit 238 at 618.

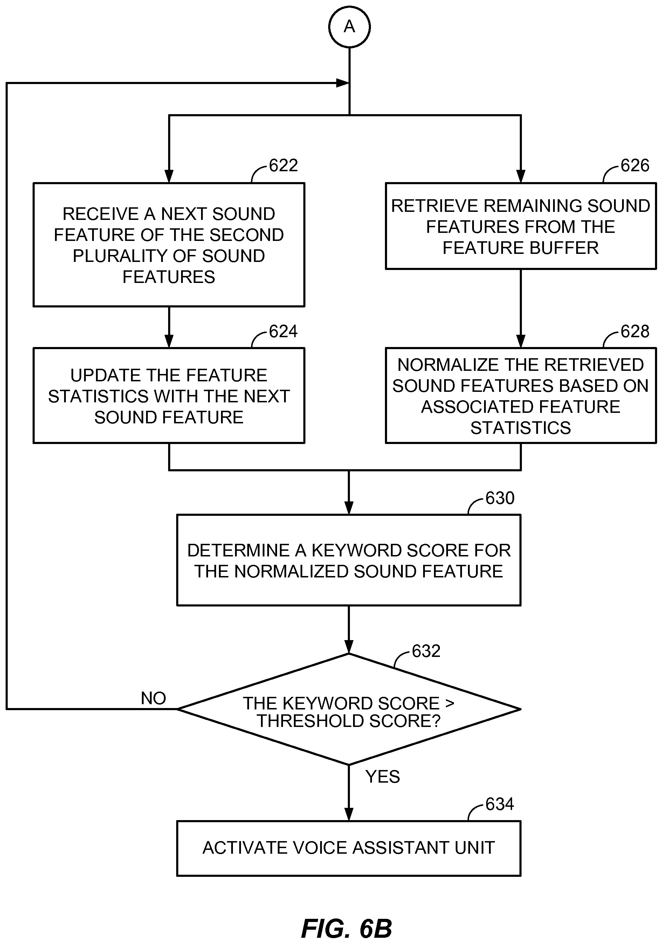

On the other hand, if none of the keyword scores is greater than the threshold score, the method proceeds to 620 to determine whether the feature buffer 330 includes less than the first number of sound features. If the feature buffer 330 includes less than the first number of sound features, the method proceeds to 622 and 626 in **FIG. 6B** to normalize the remaining sound features from the feature buffer 330 while receiving a next sound feature in the feature buffer 330. Otherwise, the method proceeds back to 606 and 610.

**FIG. 6B** is a flow chart of a method, performed in the mobile device 120, for sequentially receiving and normalizing a sequence of sound features when the feature buffer 330 includes less than the first number of sound features after previous sound features have been retrieved and normalized, according to one embodiment of the present disclosure. Initially, if the feature buffer 330 is determined to include less than the first number of sound features (e.g., F_{M-1}) at 620, the feature processing unit 350 retrieves the remaining sound features (e.g., F_{M-1}) from the feature buffer 330 at 626 and normalizes the sound features (e.g., F_{M-1}) based on the associated feature statistics (e.g., S_{M-1}) at 628. While the remaining sound features are being retrieved and normalized, a next sound feature (e.g., F_{M}) of the second plurality of sound features is received in the feature buffer 330 at 622. As the next sound feature (e.g., F_{M}) is received in the feature buffer 330, the feature statistics generator 340 accesses, at 624, the next sound feature (e.g., F_{M}) from the feature buffer 330 and updates the previous feature statistics (e.g., S_{M-1}) with the next sound feature (e.g., F_{M}) to generate updated feature statistics (e.g., SM).

After the feature processing unit 350 has normalized the sound feature at 628, the keyword score calculation unit 360 receives the normalized sound feature and determines a keyword score for the normalized sound feature at 630, as described above with reference to **FIG. 2**. Then at 632, the keyword detection unit 370 receives the keyword score for the normalized sound feature and determines whether the keyword score is greater than the threshold score. If the keyword score is greater than the threshold score, the keyword detection unit 370 activates the voice assistant unit 238 at 634. On the other hand, if the keyword score does not exceed the threshold score, the method proceeds back to 622 and 626.

**FIG. 7** is a flow chart of a method performed in the mobile device 120 for adjusting a number of sound features that are to be normalized by the feature processing unit 350 based on resource information of the mobile device 120, according to one embodiment of the present disclosure. At 710, the feature processing unit 350 receives a first number indicating sound features that are to be retrieved and normalized from the feature buffer 330. The feature processing unit 350 receives current resource information of the mobile device 120 such as information regarding availability of processor resources, processor temperature, remaining battery information, etc. at 720. The processor may be the DSP 232 or the processor 230 shown in **FIG. 2**. The feature processing unit 350 then determines based on the received resource information, at 730, whether the current resources of the mobile device 120 are sufficient to normalize the first number of sound features during the time period in which a next sound feature is received in the feature buffer 330.

If the current resources of the mobile device 120 are insufficient to normalize the first number of sound features, the feature processing unit 350 decreases the first number at 740. On the other hand, if the current resources of the mobile device 120 are sufficient, the feature processing unit 350 determines whether the current resources of the mobile device 120 are sufficient to normalize more sound features at 750. If the resources of the mobile device 120 are insufficient to normalize more sound features, the feature processing unit 350 maintains the first number at 760. Otherwise, the feature processing unit 350 can normalize more sound features and proceeds to 770 to increase the first number.

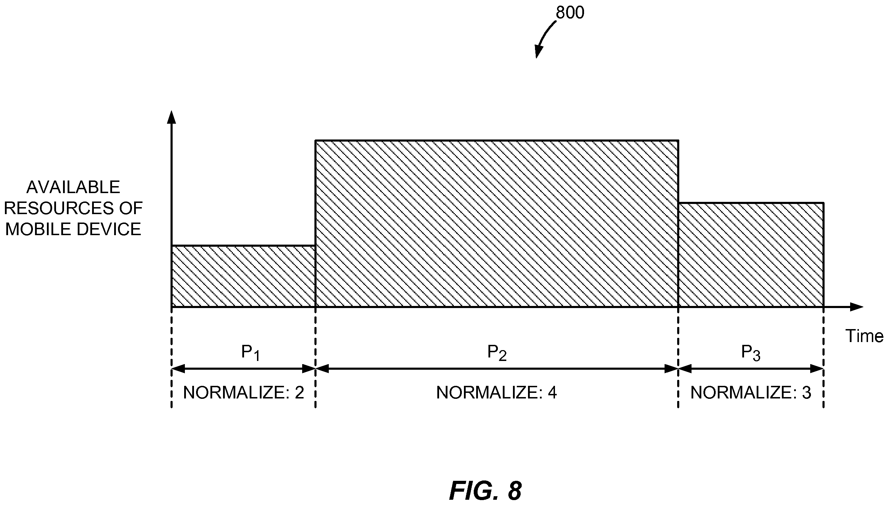

**FIG. 8** illustrates an exemplary graph 800 in which a first number indicating a number of the sound features that are to be normalized by the feature processing unit 350 is adjusted based on available resources of the mobile device 120 over a period of time, in another embodiment of the present disclosure. During a first time period P₁, the first number is two and the feature processing unit 350 retrieves and normalizes two sound features while the feature buffer 330 receives a single sound feature. Then, during a second time period P₂, the available resources of the mobile device 120 increase to allow normalization of four sound features. Thus, the first number is adjusted to four. At a next time period P₃, the available resources of the mobile device

120 decrease to allow normalization of three sound features. Accordingly, the first number is adjusted to three.

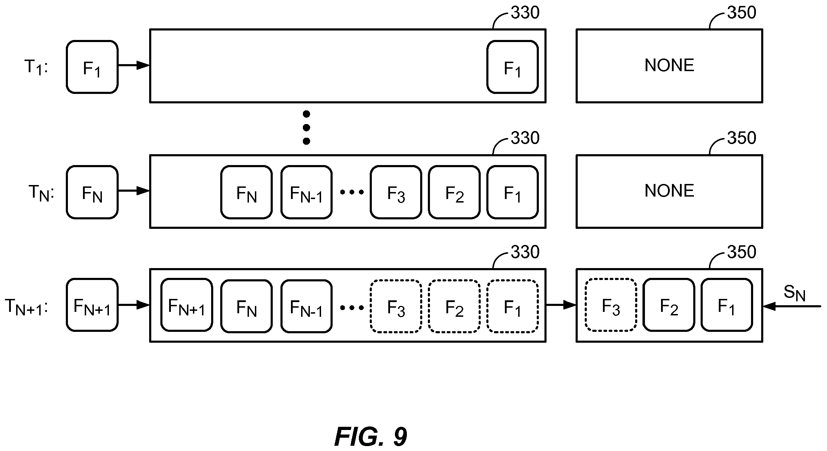

**FIG. 9** illustrates a diagram of the feature processing unit 350 configured to skip normalization of one or more sound features among a first number of sound features retrieved from the feature buffer 330, according to one embodiment of the present disclosure. As described in connection with **FIG. 5****,** the feature processing unit 350 is configured to start normalizing sound features from the feature buffer 330 after the initial feature statistics S_{N} of the N number of sound features (e.g., 30 sound features) have been generated. Thus, during the time periods T₁ through T_{N}, the feature buffer 330 sequentially receives and stores the sound features F₁ to F_{N}. Once the feature buffer 330 receives the N number of sound features F₁ to F_{N}, the feature statistics generator 340 accesses the sound features F₁ to F_{N} from the feature buffer 330 to generate the initial feature statistics S_{N}. Accordingly, during the time periods T₁ through T_{N}, the feature processing unit 350 does not normalize any sound features from the feature buffer 330.

During a time period T_{N+1}, the feature processing unit 350 retrieves the first number of sound features from the feature buffer 330 and normalizes one or more sound features of the first number of sound features while the feature buffer 330 receives the sound feature F_{N+1}. As shown, the feature processing unit 350 retrieves the first three sound features F₁, F₂, and F₃ from the feature buffer 330, skips normalization of the sound feature F₃, and normalizes two sound features F₁ and F₂ based on the initial feature statistics S_{N}. The sound features in the feature buffer 330 that are retrieved by the feature processing unit 350 are indicated as a box with a dotted line and the sound features in the feature processing unit 350 that are received but not normalized are also indicated as a box with a dotted line. Alternatively, the skipping of the sound feature F₃ may be implemented by the feature processing unit 350 retrieving only the sound features that are to be normalized, i.e., F₁ and F₂, from the feature buffer 330.

In one embodiment, the keyword score calculation unit 360 calculates a keyword score for a normalized sound feature of the sound feature F₃ by using the normalized sound feature of the sound feature F₂ as the normalized sound feature of the sound feature F₃. The skipping process may be repeated for subsequent sound features (e.g., F₆) that are received from the feature buffer 330. Thus, the process load may be reduced substantially by using a normalized sound feature and observation scores of the previous sound feature as a normalized sound feature and observation scores of a skipped sound feature. Further, since the difference between a skipped sound feature and a previous sound feature, which is used instead of the skipped sound feature for determining the keyword score, is generally not substantial, the skipping may not significantly degrade the performance in detecting the target keyword.

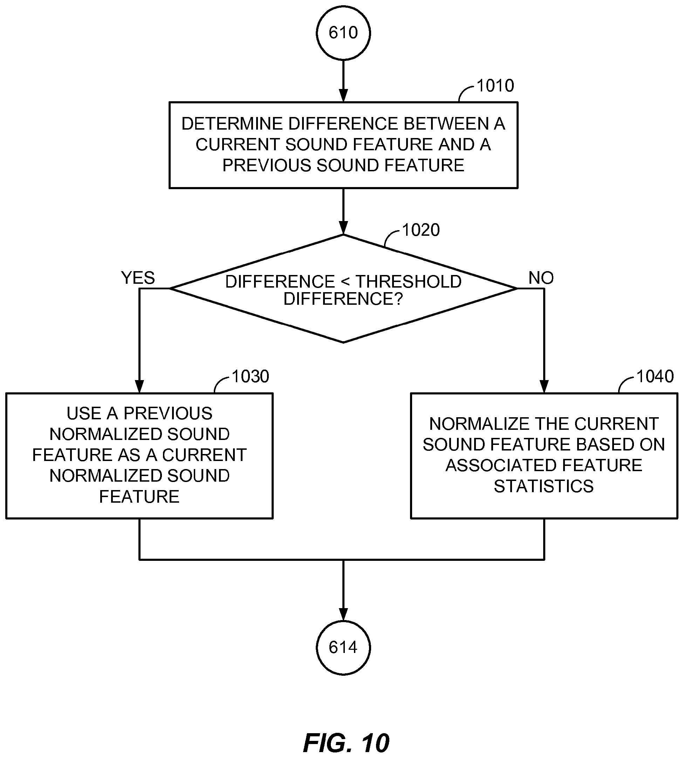

**FIG. 10** is a flow chart of a method for determining whether to perform normalization on a current sound feature based on a difference between the current sound feature and a previous sound feature, according to one embodiment of the present disclosure. The feature processing unit 350 retrieves two or more sound features from the feature buffer 330 at 610. For each of the two or more sound features, the feature processing unit 350 determines, at 1010, a difference between the sound feature as a current sound feature that is to be normalized and a previous sound feature. The difference between the sound features may be determined by calculating a distance between the sound features using any suitable distance metric such as a Euclidean distance, a Mahalonobis distance, a p-norm distance, a Hamming distance, a Manhattan distance, a Chebyshev distance, etc.

If the difference is determined to be less than a threshold difference at 1020, the feature processing unit 350 skips normalization of the current sound feature and uses a previous normalized sound feature as a current normalized sound feature at 1030. For example, if the difference between a current sound feature F₃ and a previous sound feature F₂ is less than a threshold difference, the feature processing unit 350 may skip normalization of the sound feature F₃ and use a normalized sound feature of the sound feature F₂ as a current normalized sound feature of the sound feature F₃.

If the difference is determined to be equal to or greater than the threshold difference at 1020, the feature processing unit 350 normalizes the current sound feature based on associated feature statistics at 1040. The feature processing unit 350 then provides the current normalized sound feature to the keyword score calculation unit 360 for determining a keyword score for the current sound feature. By adaptively skipping normalization of a sound feature when a difference between the sound feature and a previous sound feature is not substantial, the process load may be reduced significantly without substantially degrading the performance in detecting the target keyword.

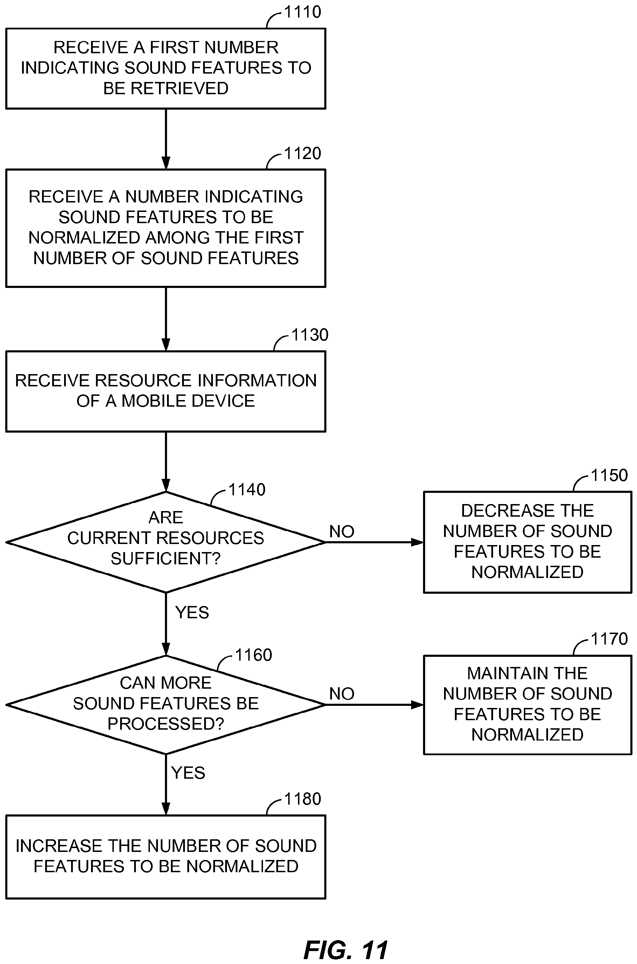

**FIG. 11** is a flow chart of a method performed in the mobile device 120 for adjusting a number of sound features that are to be normalized among a first number of sound features based on resource information of the mobile device 120, according to one embodiment of the present disclosure. At 1110, the feature processing unit 350 receives the first number of sound features that are to be retrieved from the feature buffer 330. The feature processing unit 350 then receives the number of sound features that are to be normalized among the first number of sound features at 1120.

The feature processing unit 350 receives current resource information of the mobile device 120 at 1130. The feature processing unit 350 then determines based on the received resource information, at 1140, whether the current resources of the mobile device 120 are sufficient to normalize the number of sound features among the first number of sound features during the time period in which a sound feature is received in the feature buffer 330. If the current resources of the mobile device 120 are insufficient to normalize the number of sound features, the feature processing unit 350 decreases the number of sound features that are to be normalized at 1150. That is, the number of sound features that are retrieved from the feature buffer 330 but not normalized by the feature processing unit 350 is increased such that the process load is reduced.

On the other hand, if the current resources of the mobile device 120 are determined to be sufficient at 1140, the feature processing unit 350 determines whether the current resources of the mobile device 120 are sufficient to normalize more sound features at 1160. If the resources of the mobile device 120 are insufficient to normalize more sound features, the feature processing unit 350 maintains the number of sound features that are to be normalized at 1170. Otherwise, the mobile device 120 can normalize more sound features and proceeds to 1180 to increase the number of sound features that are to be normalized such that the performance in detecting the target keyword is enhanced.

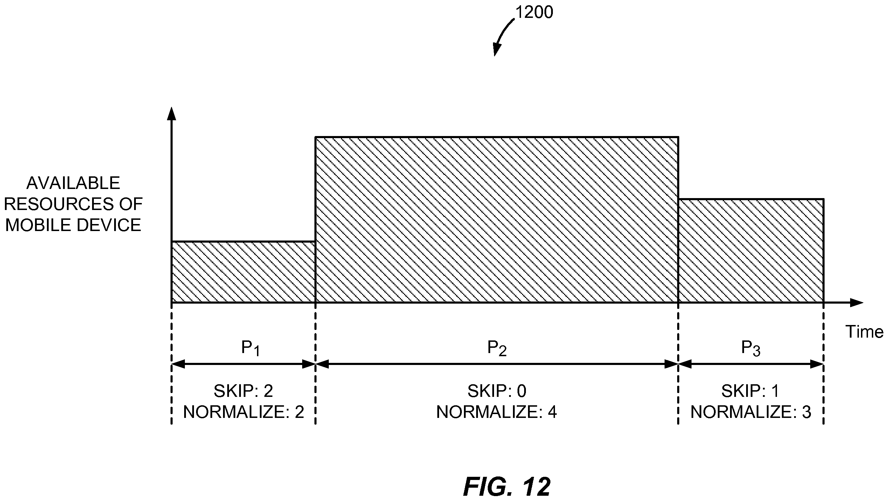

**FIG. 12** illustrates an exemplary graph 1200 in which a number indicating sound features that are to be normalized among a first number of sound features is adjusted according to available resources of the mobile device 120 over consecutive time periods P₁ through P₃, in another embodiment of the present disclosure. As shown, the first number of sound features that are to be retrieved from the feature buffer 330 is four. During the first time period P₁, once the feature processing unit 350 retrieves four sound features, it normalizes two of the sound features while skipping normalization of the other two sound features.

Then, during the second time period P2, the available resources of the mobile device 120 increase to allow normalization of four sound features. Thus, the number of sound features that are to be normalized is adjusted to four and the feature processing unit 350 proceeds to normalize all four sound features. At the next time period P3, the available resources of the mobile device 120 decrease to allow normalization of three sound features. Accordingly, the number of sound features that are normalized is adjusted to three and the feature processing unit 350 proceeds to skip normalization of one sound feature.

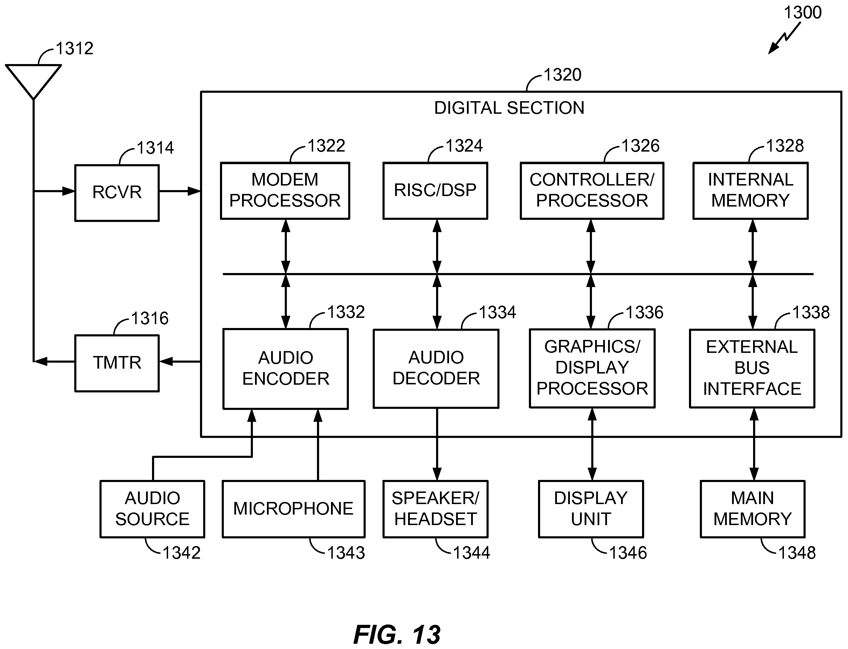

**FIG. 13** illustrates a block diagram of a mobile device 1300 in a wireless communication system in which the methods and apparatus for detecting a target keyword from an input sound to activate a function may be implemented according to some embodiments of the present disclosure. The mobile device 1300 may be a cellular phone, a terminal, a handset, a personal digital assistant (PDA), a wireless modem, a cordless phone, a tablet, and so on. The wireless communication system may be a Code Division Multiple Access (CDMA) system, a Global System for Mobile Communications (GSM) system, a Wideband CDMA (W-CDMA) system, a Long Term Evolution (LTE) system, a LTE Advanced system, and so on.

The mobile device 1300 may be capable of providing bidirectional communication via a receive path and a transmit path. On the receive path, signals transmitted by base stations are received by an antenna 1312 and are provided to a receiver (RCVR) 1314. The receiver 1314 conditions and digitizes the received signal and provides the conditioned and digitized signal to a digital section 1320 for further processing. On the transmit path, a transmitter (TMTR) receives data to be transmitted from a digital section 1320, processes and conditions the data, and generates a modulated signal, which is transmitted via the antenna 1312 to the base stations. The receiver 1314 and the transmitter 1316 is part of a transceiver that supports CDMA, GSM, W-CDMA, LTE, LTE Advanced, and so on.

The digital section 1320 includes various processing, interface, and memory units such as, for example, a modem processor 1322, a reduced instruction set computer/digital signal processor (RISC/DSP) 1324, a controller/processor 1326, an internal memory 1328, a generalized audio encoder 1332, a generalized audio decoder 1334, a graphics/display processor 1336, and/or an external bus interface (EBI) 1338. The modem processor 1322 performs processing for data transmission and reception, e.g., encoding, modulation, demodulation, and decoding. The RISC/DSP 1324 performs general and specialized processing for the mobile device 1300. The controller/processor 1326 controls the operation of various processing and interface units within the digital section 1320. The internal memory 1328 stores data and/or instructions for various units within the digital section 1320.

The generalized audio encoder 1332 performs encoding for input signals from an audio source 1342, a microphone 1343, and so on. The generalized audio decoder 1334 performs decoding for coded audio data and provides output signals to a speaker/headset 1344. It should be noted that the generalized audio encoder 1332 and the generalized audio decoder 1334 are not necessarily required for interface with the audio source, the microphone 1343 and the speaker/headset 1344, and thus are not shown in the mobile device 1300. The graphics/display processor 1336 performs processing for graphics, videos, images, and texts, which is presented to a display unit 1346. The EBI 1338 facilitates transfer of data between the digital section 1320 and a main memory 1348.

The digital section 1320 is implemented with one or more processors, DSPs, microprocessors, RISCs, etc. The digital section 1320 is also fabricated on one or more application specific integrated circuits (ASICs) and/or some other type of integrated circuits (ICs).

In general, any device described herein is indicative of various types of devices, such as a wireless phone, a cellular phone, a laptop computer, a wireless multimedia device, a wireless communication personal computer (PC) card, a PDA, an external or internal modem, a device that communicates through a wireless channel, and so on. A device may have various names, such as access terminal (AT), access unit, subscriber unit, mobile station, client device, mobile unit, mobile phone, mobile, remote station, remote terminal, remote unit, user device, user equipment, handheld device, etc. Any device described herein may have a memory for storing instructions and data, as well as hardware, software, firmware, or combinations thereof.

The techniques described herein are implemented by various means. For example, these techniques may be implemented in hardware, firmware, software, or combinations thereof. Those of ordinary skill in the art would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, the various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

For a hardware implementation, the processing units used to perform the techniques are implemented within one or more ASICs, DSPs, digital signal processing devices (DSPDs), programmable logic devices (PLDs), field programmable gate arrays (FPGAs), processors, controllers, micro-controllers, microprocessors, electronic devices, other electronic units designed to perform the functions described herein, a computer, or a combination thereof.

Thus, the various illustrative logical blocks, modules, and circuits described in connection with the disclosure herein may be implemented or performed with a general-purpose processor, a DSP, an ASIC, a FPGA or other programmable logic device, discrete gate or transistor logic, discrete hardware components, or any combination thereof designed to perform the functions described herein. A general-purpose processor may be a microprocessor, but in the alternate, the processor may be any processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in software, the functions may be stored at a computer-readable medium. Computer-readable media include both computer storage media and communication media including any medium that facilitates the transfer of a computer program from one place to another. A storage media may be any available media that can be accessed by a computer. By way of example, and not limited thereto, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Further, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc, where disks usually reproduce data magnetically, while discs reproduce data optically with lasers. Combinations of the above should also be included within the scope of computer-readable media. For example, a computer-readable storage medium may be a non-transitory computer-readable storage device that includes instructions that are executable by a processor. Thus, a computer-readable storage medium may not be a signal.

The previous description of the disclosure is provided to enable a person skilled in the art to make or use the disclosure. Various modifications to the disclosure will be readily apparent to those skilled in the art, and the generic principles defined herein are applied to other variations without departing from the scope of the disclosure. Thus, the disclosure is not intended to be limited to the examples described herein but is to be accorded the widest scope consistent with the principles and novel features disclosed herein.

Although exemplary implementations are referred to utilizing aspects of the presently disclosed subject matter in the context of one or more stand-alone computer systems, the subject matter is not so limited, but rather may be implemented in connection with any computing environment, such as a network or distributed computing environment. Still further, aspects of the presently disclosed subject matter may be implemented in or across a plurality of processing chips or devices, and storage may similarly be effected across a plurality of devices. Such devices may include PCs, network servers, and handheld devices.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method of detecting a target keyword from an input sound for activating a function in a mobile device, the method comprising:
receiving (602), by the mobile device, a first plurality of sound features extracted from a segment of an input sound stream in a buffer;
once the first plurality of sound features is received in the buffer, generating (604) feature statistics of the first plurality of sound features;
once the first plurality of sound features is received in the buffer, receiving (606), by the mobile device, a second plurality of sound features in the buffer;
for each sound feature of the second plurality of sound features received in the buffer, updating (608) the feature statistics; while receiving a sound feature of the second plurality of sound features in the buffer, processing (612), by the mobile device, a first number of sound features from the buffer, the first number of sound features including two or more sound features, wherein the processing is based on the feature statistics of the first plurality of sound features or the updated feature statistics;
determining (614), by the mobile device, a keyword score for at least one sound feature of the processed sound features; and
detecting (616), by the mobile device, the input sound as the target keyword when the keyword score is greater than a threshold score.

2. The method of Claim 1, wherein processing the first number of sound features comprises:
retrieving the first number of sound features from the buffer; and
processing the retrieved sound features based on feature statistics.

3. The method of Claim 2, wherein the feature statistics include a mean and a variance, and wherein processing the retrieved sound features comprises normalizing the retrieved sound features based on the feature statistics.

4. The method of Claim 2, wherein processing the retrieved sound features comprises processing a sound feature in the first plurality of sound features based on the feature statistics of the first plurality of sound features.

5. The method of Claim 2, wherein processing the retrieved sound features comprises:
updating the feature statistics based on a first sound feature of the second plurality of sound features; and
processing the first sound feature of the second plurality of sound features based on the updated feature statistics.

6. The method of Claim 2, wherein processing the retrieved sound features comprises processing a selected number of the retrieved sound features based on the feature statistics.

7. The method of Claim 6, wherein the selected number is adjusted based on resource information of the mobile device.

8. The method of Claim 2, wherein processing the retrieved sound features comprises:
identifying a sound feature among the retrieved sound features as a current sound feature;
determining a difference between the current sound feature and a previous sound feature; and
when the difference is less than a threshold value, using a processed sound feature corresponding to the previous sound feature as a processed sound feature corresponding to the current sound feature.

9. The method of Claim 1, wherein the first number is adjusted based on resource information of the mobile device.

10. The method of Claim 1, wherein determining the keyword score for the at least one sound feature of the processed sound features comprises calculating the keyword score using a Markov chain model.

11. The method of Claim 1, wherein processing the first number of sound features comprises, when a particular number of the sound features in the buffer is less than the first number, processing the particular number of sound features that are in the buffer.

12. The method of Claim 1,
wherein receiving the first plurality of sound features in the buffer comprises:
segmenting a first portion of the input sound into a first plurality of frames; and
extracting a first sound feature from at least one frame of the first plurality of frames,
wherein receiving the second plurality of sound features in the buffer comprises:
segmenting a second portion of the input sound into a second plurality of frames; and
extracting a second sound feature from at least one frame of the second plurality of frames.

13. The method of Claim 1, further comprising activating the function associated with the target keyword in response to the input sound being detected as the target keyword.

14. A mobile device, comprising:
means for receiving (602) and storing sound features extracted from a segment of an input sound stream in a buffer, wherein the sound features include a first plurality of sound features and a second plurality of sound features, the second plurality of sound features being received in the buffer after the first plurality of sound features is received in the buffer;
means for generating (604) feature statistics of the first plurality of sound features, once the first plurality of sound features is received in the buffer;
means for updating (608) the feature statistics for each sound feature of the second plurality of sound features received in the buffer;
means for processing (612) a first number of sound features from the means for storing the sound features while the means for storing the sound features receives a sound feature of the second plurality of sound features, the first number of the sound features including two or more sound features, wherein the processing is based on the feature statistics of the first plurality of sound features or the updated feature statistics;
means for determining (614) a keyword score for each of the processed sound features; and
means for detecting (616) an input sound as a target keyword when at least one of the keyword scores is greater than a threshold score.

15. A non-transitory computer-readable storage medium storing instructions for detecting a target keyword from an input sound for activating a function in a mobile device, the instructions causing a processor to perform the method of any of claims 1-13.

## Patentansprüche

1. Verfahren zum Erkennen eines Zielschlüsselworts von einem Eingangston zum Aktivieren einer Funktion in einem Mobilgerät, wobei das Verfahren Folgendes beinhaltet:
Empfangen (602), durch das Mobilgerät, einer ersten Mehrzahl von Tonmerkmalen, die aus einem Segment eines Eingangstonstroms in einem Puffer extrahiert wurden;
Erzeugen (604), nach dem Empfang der ersten Mehrzahl von Tonmerkmalen in dem Puffer, von Merkmalsstatistiken der ersten Mehrzahl von Tonmerkmalen;
Empfangen (606), durch das Mobilgerät, nach dem Empfang der ersten Mehrzahl von Tonmerkmalen in dem Puffer, einer zweiten Mehrzahl von Tonmerkmalen in dem Puffer;
Aktualisieren (608) der Merkmalsstatistiken für jedes Tonmerkmal der in dem Puffer empfangenen zweiten Mehrzahl von Tonmerkmalen;
Verarbeiten (612), durch das Mobilgerät, während des Empfangs eines Tonmerkmals der zweiten Mehrzahl von Tonmerkmalen in dem Puffer, einer ersten Anzahl von Tonmerkmalen von dem Puffer, wobei die erste Anzahl von Tonmerkmalen zwei oder mehr Tonmerkmale beinhaltet, wobei die Verarbeitung auf den Merkmalsstatistiken der ersten Mehrzahl von Tonmerkmalen oder den aktualisierten Merkmalsstatistiken basiert;
Bestimmen (614), durch das Mobilgerät, einer Schlüsselwortbewertung für wenigstens ein Tonmerkmal der verarbeiteten Tonmerkmalen; und
Erkennen (616), durch das Mobilgerät, des Eingangstons als Zielschlüsselwort, wenn die Schlüsselwortbewertung größer ist als eine Schwellenbewertung.

2. Verfahren nach Anspruch 1, wobei das Verarbeiten der ersten Anzahl von Tonmerkmalen Folgendes beinhaltet:
Abrufen der ersten Anzahl von Tonmerkmalen aus dem Puffer; und
Verarbeiten der abgerufenen Tonmerkmale auf der Basis von Merkmalsstatistiken.

3. Verfahren nach Anspruch 2, wobei die Merkmalsstatistiken ein Mittel und eine Varianz beinhalten und wobei das Verarbeiten der abgerufenen Tonmerkmale das Normalisieren der abgerufenen Tonmerkmale auf der Basis der Merkmalsstatistiken beinhalten.

4. Verfahren nach Anspruch 2, wobei das Verarbeiten der abgerufenen Tonmerkmale das Verarbeiten eines Tonmerkmals in der ersten Mehrzahl von Tonmerkmalen auf der Basis der Merkmalsstatistiken der ersten Mehrzahl von Tonmerkmalen beinhaltet.

5. Verfahren nach Anspruch 2, wobei das Verarbeiten der abgerufenen Tonmerkmale Folgendes beinhaltet:
Aktualisieren der Merkmalsstatistiken auf der Basis eines ersten Tonmerkmals der zweiten Mehrzahl von Tonmerkmalen; und
Verarbeiten des ersten Tonmerkmals der zweiten Mehrzahl von Tonmerkmalen auf der Basis der aktualisierten Merkmalsstatistiken.

6. Verfahren nach Anspruch 2, wobei das Verarbeiten der abgerufenen Tonmerkmale das Verarbeiten einer gewählten Anzahl der abgerufenen Tonmerkmale auf der Basis der Merkmalsstatistiken beinhaltet.

7. Verfahren nach Anspruch 6, wobei die gewählte Anzahl auf der Basis von Ressourceninformationen des Mobilgeräts justiert wird.

8. Verfahren nach Anspruch 6, wobei das Verarbeiten der abgerufenen Tonmerkmale Folgendes beinhaltet:
Identifizieren eines Tonmerkmals unter den abgerufenen Tonmerkmalen als aktuelles Tonmerkmal;
Bestimmen einer Differenz zwischen dem aktuellen Tonmerkmal und einem vorherigen Tonmerkmal; und
Benutzen, wenn die Differenz kleiner ist als ein Schwellenwert, eines verarbeiteten Tonmerkmals entsprechend dem vorherigen Tonmerkmal als verarbeitetes Tonmerkmal entsprechend dem aktuellen Tonmerkmal.

9. Verfahren nach Anspruch 1, wobei die erste Anzahl auf der Basis von Ressourceninformationen des Mobilgeräts justiert wird.

10. Verfahren nach Anspruch 1, wobei das Bestimmen der Schlüsselwortbewertung für das wenigstens eine Tonmerkmal der verarbeiteten Tonmerkmale das Berechnen der Schlüsselwortbewertung mit einem Markov-Kettenmodell beinhaltet.

11. Verfahren nach Anspruch 1, wobei das Verarbeiten der ersten Anzahl von Tonmerkmalen das Verarbeiten, wenn eine bestimmte Anzahl der Tonmerkmalen im Puffer kleiner ist als die erste Anzahl, der bestimmten Anzahl von Tonmerkmalen, die im Puffer sind.

12. Verfahren nach Anspruch 1,
wobei das Empfangen der ersten Anzahl von Tonmerkmalen im Puffer Folgendes beinhaltet:
Segmentieren eines ersten Teils des Eingangstons in eine erste Mehrzahl von Frames; und
Extrahieren eines ersten Tonmerkmals aus wenigstens einem Frame der ersten Mehrzahl von Frames,
wobei das Empfangen der zweiten Mehrzahl von Tonmerkmalen im Puffer Folgendes beinhaltet:
Segmentieren eines zweiten Teils des Eingangstons in eine zweite Mehrzahl von Frames; und
Extrahieren eines zweiten Tonmerkmals aus wenigstens einem Frame der zweiten Mehrzahl von Frames.

13. Verfahren nach Anspruch 1, das ferner das Aktivieren der mit dem Zielschlüsselwort assoziierten Funktion als Reaktion auf die Erkennung des Eingangstons als Zielschlüsselwort beinhaltet.

14. Mobilgerät, das Folgendes umfasst:
Mittel zum Empfangen (602) und Speichern von Tonmerkmalen, die von einem Segment eines Eingangstonstroms in einem Puffer extrahiert wurden, wobei die Tonmerkmale eine erste Mehrzahl von Tonmerkmalen und eine zweite Mehrzahl von Tonmerkmalen beinhalten, wobei die zweite Mehrzahl von Tonmerkmalen im Puffer nach dem Empfang der ersten Mehrzahl von Tonmerkmalen im Puffer empfangen wird;
Mittel zum Erzeugen (604) von Merkmalsstatistiken der ersten Mehrzahl von Tonmerkmalen nach dem Empfang der ersten Mehrzahl von Tonmerkmalen im Puffer;
Mittel zum Aktualisieren (608) der Merkmalsstatistiken für jedes Tonmerkmal der zweiten Mehrzahl von im Puffer empfangenen Tonmerkmalen;
Mittel zum Verarbeiten (612) einer ersten Anzahl von Tonmerkmalen von dem Mittel zum Speichern der Tonmerkmale, während das Mittel zum Speichern der Tonmerkmale ein Tonmerkmal aus der zweiten Mehrzahl von Tonmerkmalen empfängt, wobei die erste Anzahl der Tonmerkmale zwei oder mehr Tonmerkmale beinhaltet, wobei das Verarbeiten auf den Merkmalsstatistiken der ersten Mehrzahl von Tonmerkmalen oder den aktualisierten Merkmalsstatistiken basiert;
Mittel zum Bestimmen (614) einer Schlüsselwortbewertung für jedes der verarbeiteten Tonmerkmale; und
Mittel zum Erkennen (616) eines Eingangstons als Zielschlüsselwort, wenn wenigstens eine der Schlüsselwortbewertungen größer ist als eine Schwellenbewertung.

15. Nichtflüchtiges computerlesbares Speichermedium, auf dem Befehle zum Erkennen eines Zielschlüsselworts von einem Eingangston gespeichert sind, zum Aktivieren einer Funktion in einem Mobilgerät, wobei die Befehle bewirken, dass ein Prozessor das Verfahren nach einem der Ansprüche 1-13 durchführt.

## Revendications

1. Procédé de détection d'un mot clé cible d'un son d'entrée pour activer une fonction dans un dispositif mobile, le procédé comprenant :
recevoir (602), par le dispositif mobile, une première pluralité de caractéristiques sonores extraites d'un segment d'un flux sonore d'entrée dans un tampon ;
une fois que la première pluralité de caractéristiques sonores est reçue dans le tampon, générer des statistiques de caractéristiques (604) de la première pluralité de caractéristiques sonores ;
une fois que la première pluralité de caractéristiques sonores est reçue dans le tampon, recevoir (606), par le dispositif mobile une deuxième pluralité de caractéristiques sonores dans le tampon ;
pour chaque caractéristique sonore de la deuxième pluralité de caractéristiques sonores reçue dans le tampon, actualiser (608) les statistiques de caractéristiques ; pendant la réception d'une caractéristique sonore de la deuxième pluralité de caractéristiques sonores dans le tampon, traiter (612), par le dispositif mobile, un premier nombre de caractéristiques sonores du tampon, le premier nombre de caractéristiques sonores comprenant deux caractéristiques sonores ou plus, où le traitement est basé sur les statistiques de caractéristiques de la première pluralité de caractéristiques sonores ou sur les statistiques de caractéristiques actualisées ;
déterminer (614), par le dispositif mobile, un score de mot clé pour au moins une caractéristique sonore des caractéristiques sonores traitées ; et
détecter (616), par le dispositif mobile, le son d'entrée comme le mot clé cible lorsque le score de mot clé est plus grand qu'un score seuil.

2. Procédé selon la revendication 1, dans lequel traiter le premier nombre de caractéristiques sonores comprend :
retrouver le premier nombre de caractéristiques sonores du tampon ; et
traiter les caractéristiques sonores retrouvées sur la base des statistiques de caractéristiques.

3. Procédé selon la revendication 2, dans lequel les statistiques de caractéristiques comprennent une moyenne et une variance, et dans lequel traiter les caractéristiques sonores retrouvées comprend normaliser les caractéristiques sonores retrouvées sur la base des statistiques de caractéristiques .

4. Procédé selon la revendication 2, dans lequel traiter les caractéristiques sonores retrouvées comprend traiter une caractéristique sonore dans la première pluralité de caractéristiques sonores sur la base des statistiques de caractéristiques de la première pluralité de caractéristiques sonores.

5. Procédé selon la revendication 2, dans lequel traiter les caractéristiques sonores retrouvées comprend :
actualiser les statistiques de caractéristiques sur la base d'une première caractéristique sonore de la deuxième pluralité de caractéristiques sonores ; et
traiter la première caractéristique sonore de la deuxième pluralité de caractéristiques sonores sur la base des statistiques de caractéristiques actualisées.

6. Procédé selon la revendication 2, dans lequel traiter les caractéristiques sonores retrouvées comprend traiter un nombre sélectionné des caractéristiques sonores retrouvées sur la base des statistiques de caractéristiques.

7. Procédé selon la revendication 6, dans lequel le nombre sélectionné est ajusté sur la base d'informations de ressources du dispositif mobile.

8. Procédé selon la revendication 2, dans lequel traiter les caractéristiques sonores retrouvées comprend :
identifier une caractéristique sonore parmi les caractéristiques sonores retrouvées comme une caractéristique sonore courante ;
déterminer une différence entre la caractéristique sonore courante et une caractéristique sonore précédente ; et
lorsque la différence est moindre qu'une valeur seuil, utiliser une caractéristique sonore traitée correspondant à une caractéristique sonore précédente comme une caractéristique sonore traitée correspondant à la caractéristique sonore courante.

9. Procédé selon la revendication 1, dans lequel le premier nombre est ajusté sur la base des informations de ressources du dispositif mobile.

10. Procédé selon la revendication 1, dans lequel déterminer le score de mot clé pour la au moins une caractéristique sonore des caractéristiques sonores traitées comprend calculer le score de mot clé en utilisant un modèle de chaîne de Markov.

11. Procédé selon la revendication 1, dans lequel traiter le premier nombre de caractéristiques sonores comprend, lorsqu'un nombre particulier des caractéristiques sonores dans le tampon est moindre que le premier nombre, traiter le nombre particulier de caractéristiques sonores qui sont dans le tampon.

12. Procédé selon la revendication 1,
dans lequel recevoir la première pluralité de caractéristiques sonores dans le tampon comprend :
segmenter une première partie du son d'entrée en une première pluralité de trames ; et
extraire une première caractéristique sonore d'au moins une trame de la première pluralité de trames,
dans lequel recevoir la deuxième pluralité de caractéristiques sonores dans le tampon comprend :
segmenter une deuxième partie du son d'entrée en une deuxième pluralité de trames ; et
extraire une deuxième caractéristique sonore d'au moins une trame de la deuxième pluralité de trames.

13. Procédé selon la revendication 1, comprenant en outre activer la fonction associée au mot clé cible en réponse au fait que le son d'entrée est détecté comme le mot clé cible.

14. Dispositif mobile, comprenant :
un moyen pour recevoir (602) et stocker des caractéristiques sonores extraites d'un segment d'un flux sonore d'entrée dans un tampon, où les caractéristiques sonores comprennent une première pluralité de caractéristiques sonores et une deuxième pluralité de caractéristiques sonores, la deuxième pluralité de caractéristiques sonores étant reçue dans le tampon après que la première pluralité de caractéristiques sonores a été reçue dans le tampon ;
un moyen pour générer (604) des statistiques de caractéristiques de la première pluralité de caractéristiques sonores, une fois que la première pluralité de caractéristiques sonores est reçue dans le tampon ;
un moyen pour actualiser (608) les statistiques de caractéristiques pour chaque caractéristique sonore de la deuxième pluralité de caractéristiques sonores reçue dans le tampon ;
un moyen pour traiter (612) un premier nombre de caractéristiques sonores du moyen pour stocker les caractéristiques sonores pendant que le moyen pour stocker les caractéristiques sonores reçoit une caractéristique sonore de la deuxième pluralité de caractéristiques sonores, le premier nombre de caractéristiques sonores comprenant deux caractéristiques sonores ou plus, où le traitement est basé sur les statistiques de caractéristiques de la première pluralité de caractéristiques sonores ou sur les statistiques de caractéristiques actualisées ;
un moyen pour déterminer (614) un score de mot clé pour chacune des caractéristiques sonores traitées ; et
un moyen pour détecter (616) un son d'entrée comme un mot clé cible lorsque au moins l'un des scores de mot clé est plus grand qu'un score seuil.

15. Support de stockage non transitoire lisible par ordinateur stockant des instructions pour détecter un mot clé cible d'un son d'entrée pour activer une fonction dans un dispositif mobile, les instructions faisant qu'un processeur mette en oeuvre le procédé selon l'une quelconque des revendications 1-13.
